# EUROPEAN PATENT APPLICATION

(11) **EP 3 357 872 A1**
(43) Date of publication of application: **08.08.2018**
(21) Application number: 15905478.2
(22) Date of filing: 02.10.2015
(51) Int. Cl.: C02F 3/12, C02F 1/78, C02F 9/00

(54) **WASTEWATER TREATMENT SYSTEM AND WASTEWATER TREATMENT METHOD**

(71) Applicant: Huens Co., Ltd., Obihiro-shi, Hokkaido 080-0804 (JP); Huens Global Pte. Ltd., 068898 (SG)
(72) Inventor: SHITARA, Moriyoshi, Obihiro-shi Hokkaido 080-0804 (JP); TAKAHASHI, Manabu, Obihiro-shi Hokkaido 080-0804 (JP); NAKAHATA, Yuusuke, Obihiro-shi Hokkaido 080-0804 (JP)
(74) Representative: Potter Clarkson LLP
(86) International application number: PCT/JP2015/078117
(87) International publication number: WO 2017/056325

(57) **Abstract**

A wastewater treatment system including, storing in a storage unit, a wastewater storage tank for storing wastewater containing organic matter, an ozone treatment device for treating wastewater with ozone, thereby reducing the molecular weight of organic matter contained in wastewater, a wastewater circulating structure for conveying wastewater stored in the wastewater storage tank to the ozone treatment device and circulating the ozone-treated wastewater back into the wastewater storage tank, and a biological treatment tank for bringing aerobic microorganisms into contact with wastewater, conveyed from the wastewater storage tank, which contains the ozone-treated wastewater, thereby reducing organic matter contained in wastewater.

## Description

### Technical Field

Embodiments discussed in the present specification relates to a wastewater treatment system including an ozone treatment device and a wastewater treatment method.

### Background Art

When wastewater such as factory wastewater, domestic wastewater, and sewage is released into rivers or marine waters, it is necessary to remove substances that may cause pollution using a wastewater treatment system such that, for example, the biochemical oxygen demand (BOD), chemical oxygen demand, (COD), and suspended solid (SS) in wastewater are not more than given reference values for wastewater. There are conventionally known wastewater treatment systems for removing substances that may cause pollution from wastewater, for which physicochemical treatment such as coagulation sedimentation treatment or ion-exchange treatment and biological treatment such as aerobic treatment using activated sludge and a biological membrane are employed.

For example, Patent literature 1 discloses a wastewater treatment system, which comprises a biological treatment tank for conducting biological treatment with aerobic microorganisms and a sedimentation tank for separating wastewater after biological treatment into a sediment and supernatant liquid. In the biological treatment tank of the wastewater treatment system, wastewater is mixed with activated sludge and degassing air so as to be biologically treated in an aerobic manner. In addition, biologically treated wastewater and activated sludge in the biological treatment tank flow into the sedimentation tank, precipitation separation of activated sludge takes place, and the supernatant liquid is discharged as treated water.

### Citations List

### Patent Literature

Patent literature 1: Japanese Unexamined Patent Publication (Kokai) No. 2005-131594

### Summary

### Technical Problem

However, wastewater treatment systems using conventional biological treatment cause mass generation of polluted matter resulting from due to solid-liquid separation and excess sludge such as activated sludge, which disadvantageously results in a very high cost for disposal of generated waste.

The wastewater treatment system and the wastewater treatment method have been made for solving the above problems. It is an object of the invention to provide the wastewater treatment system and The wastewater treatment method, whereby it is possible to prevent generation of waste such as excess sludge and reduce the waste disposal cost.

### Solution to Problem

According to an aspect of a wastewater treatment system, there is provided a wastewater treatment system including, a wastewater storage tank for storing wastewater containing organic matter, an ozone treatment device for treating wastewater with ozone, thereby reducing the molecular weight of organic matter contained in wastewater, a wastewater circulating structure for conveying wastewater stored in the wastewater storage tank to the ozone treatment device and circulating the ozone-treated wastewater back into the wastewater storage tank, and a biological treatment tank for bringing aerobic microorganisms into contact with wastewater, conveyed from the wastewater storage tank, which contains the ozone-treated wastewater, thereby reducing organic matter contained in wastewater.

According to an aspect of the wastewater treatment system, wherein the wastewater circulating structure includes, an ozone-treated water-conveying pipe, for conveying wastewater stored in the wastewater storage tank to the ozone treatment device, which is disposed between the wastewater storage tank and the ozone treatment device, an ozone-treated wastewater circulating pipe, for circulating the ozone-treated wastewater back into the wastewater storage tank, which is disposed between the wastewater storage tank and the ozone treatment device, and an ozone-treated water-conveying pump for conveying wastewater stored in the wastewater storage tank to the ozone treatment device.

According to an aspect of the wastewater treatment system, the wastewater treatment system further includes a separator for separating suspended matter or solid matter contained in wastewater and conveying wastewater that does not contain the separated suspended matter or solid matter from the wastewater storage tank to the biological treatment tank, the separator is disposed between the wastewater storage tank and the biological treatment tank.

According to an aspect of the wastewater treatment system, the wastewater treatment system further includes a froth-circulating pipe for circulating suspended solids separated in the separator back into the wastewater storage tank.

According to an aspect of the wastewater treatment system, wherein the separator is a pressure floatation device or coagulation sedimentation device.

According to an aspect of the wastewater treatment system, wherein the ozone treatment device is a swirl jet-type ozone treatment device, equipped with a nozzle for jetting ozone gas, which generates a swirl jet flow phenomenon induced by the ozone gas jetted by the nozzle, thereby stirring wastewater with the ozone gas.

According to an aspect of the wastewater treatment system, wherein the ozone treatment device is an ejector-type ozone mixing device or ozone diffuser.

According to an aspect of the wastewater treatment system, wherein the wastewater storage tank includes a measuring instrument for measuring the amount of organic matter in wastewater stored in the wastewater storage tank, and a controller for conveying wastewater stored in the wastewater storage tank to the ozone treatment device when the amount of organic matter in wastewater stored in the wastewater storage tank is not less than a given threshold, and conveying wastewater stored in the wastewater storage tank to the biological treatment tank when the amount of organic matter in wastewater is less than a given threshold.

According to an aspect of the wastewater treatment system, the wastewater treatment system further includes a sedimentation tank for separating wastewater into a sediment and supernatant liquid, wherein the sedimentation tank comprises a sediment discharging pump for circulating a sediment precipitated in the sedimentation tank back into the wastewater storage tank.

According to an aspect of a wastewater treatment method, there is provided a wastewater treatment method including the steps of, storing wastewater containing organic matter in a wastewater storage tank, conveying wastewater stored in the wastewater storage tank to an ozone treatment device, using a wastewater circulating structure, treating the conveyed wastewater with ozone, thereby reducing the molecular weight of organic matter contained in wastewater, using the ozone treatment device, circulating the ozone-treated wastewater back to the wastewater storage tank, using the wastewater circulating structure, and bringing aerobic microorganisms into contact with wastewater which contains the ozone-treated wastewater and is conveyed from the wastewater storage tank, thereby reducing organic matter contained in wastewater, using a biological treatment tank.

### Advantageous Effects

The wastewater treatment system and the wastewater treatment method make it possible to prevent generation of waste such as excess sludge and reduce the waste disposal cost. In addition, the wastewater treatment system and the wastewater treatment method make it possible to improve purification effects of biological treatment and sufficiently remove a substance that is a cause of pollution from wastewater.

### Brief Description of Drawings

FIG. 1 is a schematic diagram for explaining the outline of a wastewater treatment system 1.
FIG. 2 is a schematic diagram for explaining one example of wastewater treatment using a wastewater storage tank 2 and an ozone treatment device 3.
FIG. 3 is a schematic diagram for explaining one example of wastewater treatment using a biological treatment tank 4.
FIG. 4 is a schematic diagram for explaining one example of wastewater treatment using a sedimentation tank 5.
FIG. 5 is a flowchart for explaining one example of wastewater treatment using the wastewater treatment system 1.
FIG. 6 is a schematic diagram for explaining the outline of a wastewater treatment system 10.
FIG. 7 is a schematic diagram for explaining one example of wastewater treatment using a separator 9.
FIG. 8 is a schematic diagram for explaining the outline of a wastewater treatment system 100.
FIG. 9 is a flowchart illustrating one example of wastewater treatment using the wastewater treatment system 100.

### Description of Embodiments

Various embodiments of the present invention are described below with reference to the drawings. Note that the technical scope of the present invention is not limited to those embodiments and encompasses the claimed invention and equivalents thereof.

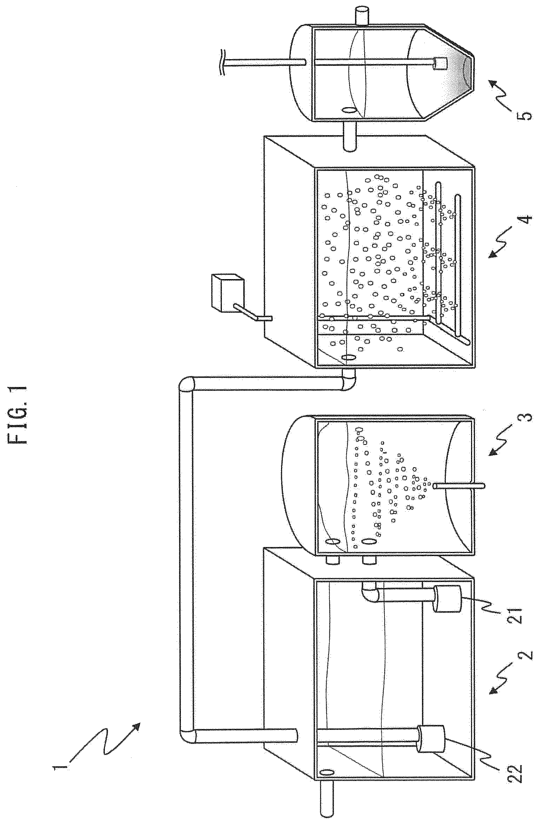

(First embodiment) FIG. 1 is a schematic diagram for explaining the outline of a wastewater treatment system 1 in the first embodiment. The wastewater treatment system 1 in first embodiment has a function to remove a substance that may be a cause of pollution from wastewater discharged from wastewater generation sources such as factories or homes, and includes at least a wastewater storage tank 2, an ozone treatment device 3, a biological treatment tank 4, and a sedimentation tank 5. Examples of a substance that may be a cause of pollution include organic substances. Hereinafter, organic substances are simply referred to as "organic matter" in some cases.

The wastewater storage tank 2 is, for example, a flow rate adjustment tank, and has a function to store wastewater flowing therein from a wastewater generation source and convey the wastewater to the ozone treatment device 3 and the biological treatment tank 4 for conducting after treatment and also a function to store wastewater circulated back from the ozone treatment device 3. Wastewater flowing in from a wastewater generation source may be first stored in a raw water tank (not illustrated) and then conveyed from the raw water tank to the wastewater storage tank 2.

In addition, the wastewater storage tank 2 includes an ozone-treated water-conveying pump 21 and a biologically treated water-conveying pump 22. The ozone-treated water-conveying pump 21 conveys wastewater stored in the wastewater storage tank 2 to the ozone treatment device 3. The biologically treated water-conveying pump 22 conveys wastewater stored in the wastewater storage tank 2 to the biological treatment tank 4 after the elapse of a given period of time from conveying of wastewater stored in the wastewater storage tank 2 to the ozone treatment device 3.

The ozone treatment device 3 mixes wastewater conveyed from the wastewater storage tank 2 with ozone gas for ozone treatment and circulates ozone-treated wastewater back to the wastewater storage tank 2. The ozone treatment device 3 jets the ozone gas to wastewater conveyed into the ozone treatment device 3, thereby allowing organic matter contained in wastewater to react with the ozone gas so as to be decomposed. In particular, persistent polymers contained in wastewater are allowed to react with the ozone gas such that the molecular weights of such polymers are reduced. Therefore, the amount of aerobic microorganisms to be adsorbed by polluted substances increases in the subsequent biological treatment, which results in the improvement of polluted substance removal efficiency. In addition, the reaction between organic matter and the ozone gas causes dissolved oxygen in wastewater to increase, making it possible to improve the function of activated sludge in the subsequent biological treatment. The ozone treatment device 3 conducts so-called swirl jet-type ozone treatment described in, for example, Japanese Patent No. 4195782. Hereinafter, a device for conducting swirl jet-type ozone treatment is referred to as a "swirl jet-type ozone treatment device" in some cases. In addition, a publicly known ozone mixer or the like may be used as an ozone treatment device 3. Note that any device, which is not limited to the above-described swirl jet-type ozone treatment device and an ozone mixer, may be used as the ozone treatment device 3 as long as wastewater is mixed with ozone.

The biological treatment tank 4 conducts biological treatment of wastewater conveyed from the wastewater storage tank 2 using activated sludge. Activated sludge is a mud-like aggregate of aerobic microorganisms capable of oxidative decomposition of organic matter contained in wastewater. Examples of aerobic microorganisms include bacteria, protozoa, and metazoa/metabacteria. In the biological treatment tank 4, aerobic microorganisms adsorb polluted substances in wastewater containing organic matter, which has been conveyed from the wastewater storage tank 2, so as to consume oxygen, thereby achieving oxidative decomposition or absorptive separation of organic matter and purifying wastewater containing organic matter. The wastewater purified in the biological treatment tank 4 flows into the sedimentation tank 5. Alternatively, wastewater conveyed from the wastewater storage tank 2 may be biologically treated by a biological membrane method in the biological treatment tank 4. According to the biological membrane method, a biological membrane filter, to which aerobic microorganisms are adhering, is installed inside of the biological treatment tank 4 such that aerobic microorganisms adhering to the biological membrane filter are brought into contact with polluted substances including organic matter in wastewater, thereby achieving oxidative decomposition or absorptive separation of organic matter and purifying wastewater containing organic matter. Upon biological treatment conducted in the biological treatment tank 4, any method, which is not limited to the above-described activated sludge method and biological membrane method, may be employed as long as it is a method, in which aerobic microorganisms are brought into contact with organic matter in wastewater, such as the trickling filter method or the rotating disc contactor method.

In the sedimentation tank 5, precipitation separation of wastewater that has flown in from the biological treatment tank 4 takes place such that wastewater is separated into a sediment and supernatant liquid. The sediment is activated sludge or polluted matter in wastewater that has flown in from the biological treatment tank 4. Precipitation takes place due to a specific gravity difference between the sediment and water. After the elapse of a given period of time after influx of wastewater from the biological treatment tank 4, the supernatant liquid formed as a result of precipitation separation is released as treated wastewater from the sedimentation tank 5 into the sewage treatment plant at an industrial complex or the like, the community plant at a housing complex or the like, the sewage system, rivers or marine waters, and the like.

As stated above, the wastewater treatment system 1 can reduce the molecular weight of organic matter contained in wastewater in the ozone treatment device 3 prior to biological treatment of wastewater that has flown in from a wastewater generation source in the biological treatment tank 4, thereby making it possible to improve purification effects of biological treatment. Accordingly, the wastewater treatment system 1 can sufficiently remove a substance that may be a cause of sludge from wastewater. In addition, since the wastewater treatment system 1 can reduce the amount of sludge to be discarded, it becomes possible to reduce the amount of industrial waste to be treated, thereby reducing waste disposal cost.

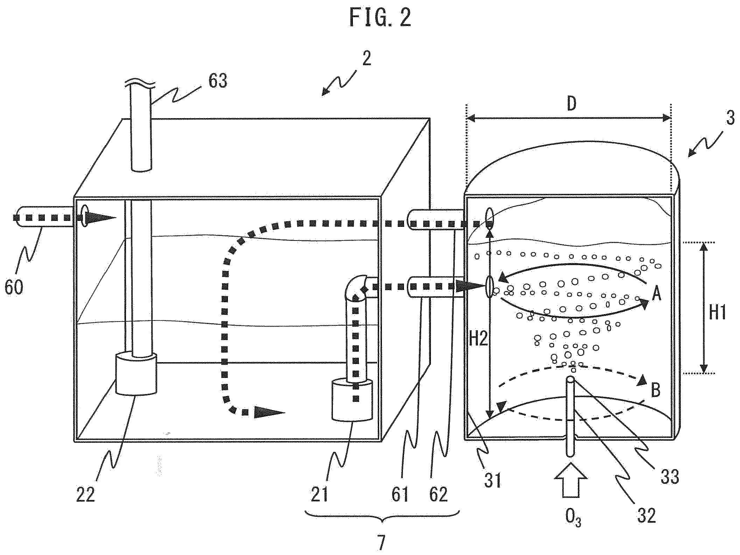

FIG. 2 is a schematic diagram for explaining one example of wastewater treatment using a wastewater storage tank 2 and an ozone treatment device 3.

The wastewater storage tank 2 stores wastewater that has flown in from a wastewater generation source via a storage tank influx pipe 60. The ozone-treated water-conveying pump 21 conveys wastewater stored in the wastewater storage tank 2 to the ozone treatment device 3 via an ozone-treated water-conveying pipe 61.

The ozone treatment device 3 mixes wastewater conveyed from the wastewater storage tank 2 with ozone gas for ozone treatment. At first, ozone gas to be supplied into the ozone treatment device 3 is generated by an ozone generator, which is not illustrated herein. The ozone generator compresses air using, for example, an air compressor, generates concentrated oxygen gas from compressed air by the pressure swing adsorption (PSA) method, and applies a high voltage using an electric discharge unit or the like, thereby generating ozone gas from a concentrated oxygen gas.

As illustrated in FIG. 2, the ozone treatment device 3 includes a cylindrical container 31 for storing wastewater to be treated and an ozone jetting nozzle 32 for jetting ozone gas, which is disposed so as to protrude upwardly from the bottom face of the cylindrical container 31. The inner diameter of the cylindrical container 31 is represented by D, and the depth from the liquid level of wastewater to the tip of an ozone jetting port 33 of the ozone jetting nozzle 32 is represented by HI. In order to maintain the height of the liquid level in the cylindrical container 31 at a certain level, wastewater stored in the wastewater storage tank 2 is appropriately conveyed through the ozone-treated water-conveying pipe 61.

As described in Japanese Patent No. 4195782, a ratio of the depth H1 of the ozone jetting port 33 to the internal diameter D of the cylindrical container 31 (Hl/D) falls within a range of approximately 0.3 to 1.0, and when a gas is jetted at a flow rate that satisfies certain conditions from the ozone jetting port 33, wastewater in the cylindrical container 31 makes a circle current in the direction of, for example, arrow A as illustrated in FIG. 2. Certain conditions required herein mean that Q that is the flow rate of a gas to be jetted satisfies ρQ2/(σD3) = 10-5, and the flow rate is not more than a level at which bubbles are not allowed to burst at the liquid level. Note that ρ represents wastewater density, and σ represents surface tension of wastewater. In addition, when wastewater at the upper level of the ozone jetting port 33 makes a circle current in the direction of arrow A, wastewater at the lower level of the ozone jetting port 33 makes a circle current in the direction of arrow B opposed to arrow A because of the law of conservation of angular momentum.

As stated above, a swirl jet flow phenomenon is induced by jetting ozone gas in the ozone treatment device 3. As a result, in the ozone treatment device 3, wastewater in the cylindrical container 31 is stirred without using a mechanical driving source such as a propeller. In the ozone treatment device 3, wastewater in the cylindrical container 31 is stirred in the above manner such that fine bubbles of ozone gas are dispersed in wastewater, which allows ozone and wastewater to react with each other efficiently, compared with a method in which ozone gas is simply injected from the bottom face of the cylindrical container 31. Accordingly, powerful oxidation power of ozone causes reduction of the molecular weight of polymer organic matter such as an oil content in wastewater. Note that jetting of ozone gas from the ozone generator and the jetting time are controlled by an ozone control unit, which is not illustrated herein, such that the amount of organic matter in wastewater is not more than a given threshold. The amount of organic matter is represented by total organic carbon (TOC), COD, or the like.

As stated above, according to swirl jet-type ozone treatment for jetting ozone gas to generate a swirl jet flow which allows ozone gas to react with wastewater, the amount of polluted substances that can be adsorbed by aerobic microorganisms in the subsequent biological treatment increases, thereby making it possible to improve polluted substance removal efficiency.

In addition, swirl jet-type ozone treatment is advantageous in different ways because the treatment is effective not only for reducing the molecular weight of polymer organic matter such as an oil content but also for reducing generation of sludge, and the treatment has excellent deodorizing/decoloring effects.

Although swirl jet-type ozone treatment is explained as a treatment for allowing ozone gas to react with wastewater in the wastewater treatment system 1, it is also possible to dissolve ozone gas in wastewater using an ejector-type ozone mixing device, an ozone diffuser, or the like. For example, the ejector-type ozone mixing device is a device for mixing ozone gas and wastewater by aspirating ozone gas with the use of the vacuuming effects of negative pressure generated when jetting wastewater in the form of contracted flow and jetting bubbles of ozone gas into wastewater.

As illustrated in FIG. 2, the wastewater storage tank 2 and the ozone treatment device 3 are connected to each other via an overflow pipe 62. In other words, when the water level of wastewater in the ozone treatment device 3 (the cylindrical container 31) increases to not less than the height of the lower end of a connecting port of the overflow pipe 62 (H2) in the cylindrical container 31, wastewater at a level not less than the position of the connection is circulated back to the wastewater storage tank 2. Accordingly, wastewater in the wastewater storage tank 2 is conveyed to the ozone treatment device 3 through the ozone-treated water-conveying pipe 61 by the ozone-treated water-conveying pump 21, and the conveyed wastewater is ozone-treated by the ozone treatment device 3. The ozone-treated wastewater is circulated back to the wastewater storage tank 2 through the overflow pipe 62, the wastewater in the wastewater storage tank 2 and the ozone-treated wastewater are mixed, and the mixed wastewater in the wastewater storage tank 2 is conveyed to the ozone treatment device 3.

As stated above, the ozone-treated water-conveying pump 21, the ozone-treated water-conveying pipe 61, and the overflow pipe 62 function to cause wastewater in the wastewater storage tank 2 and wastewater in the ozone treatment device 3 to be circulated. Then, after circulation of wastewater for a given period of time, wastewater in the wastewater storage tank 2 is conveyed by the biologically treated water-conveying pump 22 through the storage tank outflux pipe 63. The overflow pipe 62 is one example of an ozone-treated wastewater circulating pipe, and the ozone-treated water-conveying pump 21, the ozone-treated water-conveying pipe 61, and the overflow pipe 62 are examples of the wastewater circulating structure 7.

The ozone-treated water-conveying pump 21 may be disposed between the wastewater storage tank 2 and the ozone treatment device 3 or in the ozone treatment device 3 instead of the wastewater storage tank 2. Alternatively, instead of the ozone-treated water-conveying pump 21, an ozone treatment circulating pump (not illustrated) may be disposed in the wastewater storage tank 2, between the wastewater storage tank 2 and the ozone treatment device 3, or in the ozone treatment device 3. In this case, the ozone treatment circulating pump is connected to the overflow pipe 62. It is also possible to use the ozone-treated water-conveying pump 21 and the ozone treatment circulating pump simultaneously.

It is also possible to install the biologically treated water-conveying pump 22 outside of the wastewater storage tank 2. It is also possible to combine the ozone-treated water-conveying pump 21 and the biologically treated water-conveying pump 22 into one discharging pump. In this case, each of the ozone-treated water-conveying pipe 61 and the storage tank outflux pipe 63 is provided with a valve. When wastewater is conveyed to the ozone treatment device 3, the valve of the ozone-treated water-conveying pipe 61 is opened and the valve of the storage tank outflux pipe 63 is closed. When wastewater is conveyed to the biological treatment tank 4, the valve of the storage tank outflux pipe 63 is opened and the valve of the ozone-treated water-conveying pipe 61 is closed. Note that a three-way valve may be provided to connect are discharging pump, the ozone-treated water-conveying pipe 61, and the storage tank outflux pipe 63.

As described above, the ozone treatment device 3 allows wastewater conveyed from the wastewater storage tank 2 to efficiently react with ozone, and the ozone-treated wastewater is circulated back to the wastewater storage tank 2 and conveyed to the ozone treatment device 3 in a repetitive manner. Thus, by using the ozone treatment device 3 dedicated for ozone treatment, it is possible to reduce the molecular weight of polymer organic matter such as an oil content in wastewater with high efficiency, compared with a method in which ozone gas is simply injected into wastewater in the wastewater storage tank 2.

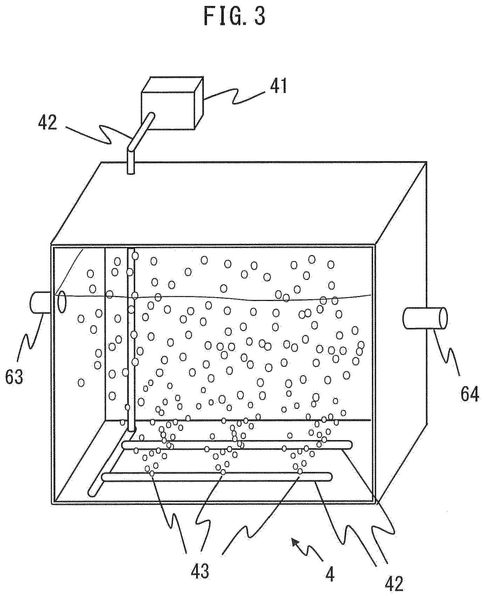

FIG. 3 is a schematic diagram for explaining one example of wastewater treatment using a biological treatment tank 4.

The biological treatment tank 4 contains activated sludge and is equipped with an air piping 42. The air piping 42 is connected to a blower 41 for supplying air. Wastewater in the wastewater storage tank 2 is conveyed into the biological treatment tank 4 through the storage tank outflux pipe 63. Wastewater in the wastewater storage tank 2 contains ozone-treated organic matter having a reduced molecular weight.

The air piping 42 has a plurality of small-diameter air jetting ports 43 for jetting air supplied by the blower 41 into wastewater containing organic matter. Air is jetted from the air jetting ports 43 of the air piping 42 into the biological treatment tank 4 such that aerobic microorganisms contained in activated sludge are degassed. Accordingly, polluted substances contained in wastewater containing organic matter are biodegraded (by oxidative decomposition or absorptive separation), thereby purifying wastewater containing organic matter. Then, the wastewater purified in the biological treatment tank 4 flows into the sedimentation tank 5 through a sedimentation tank influx pipe 64. Since the air piping 42 is disposed at the bottom portion of the biological treatment tank 4, air jetted from the air jetting port 43 causes wastewater and activated sludge to be stirred, which results in the improvement of efficiency of adsorption of aerobic microorganisms to polluted substances.

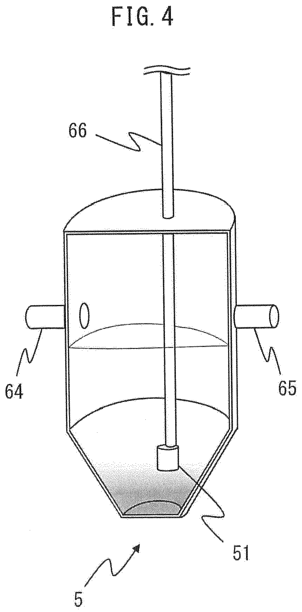

FIG. 4 is a schematic diagram for explaining one example of wastewater treatment using a sedimentation tank 5.

The sedimentation tank 5 is equipped with a sediment discharging pump 51 and a sediment circulating pipe 66. In the sedimentation tank 5, precipitation separation of wastewater that has flown in from the biological treatment tank 4 through the sedimentation tank influx pipe 64 takes place such that the wastewater is separated into a sediment and supernatant liquid. Next, after the elapse of a given period of time after the influx of wastewater from the biological treatment tank 4, the sediment discharging pump 51 discharges the precipitated sediment in the sedimentation tank 5 outside of the sedimentation tank 5 through the sediment circulating pipe 66. The sediment discharging pump 51 is disposed at a level not more than a given height from the bottom face of the sedimentation tank 5 so as to discharge the sediment. Then, the supernatant liquid formed as a result of precipitation separation is released as treated wastewater from the sedimentation tank 5 through the treated wastewater discharging pipe 65 into the sewage treatment plant at an industrial complex or the like, the community plant at a housing complex or the like, the sewage system, rivers or marine waters, and the like. The sediment discharging pump 51 may be installed outside of the sedimentation tank 5. Alternatively, it is also possible to form an outlet for discharging a sediment at a level not more than a given height from the bottom face of the sedimentation tank 5 without installing the sediment discharging pump 51.

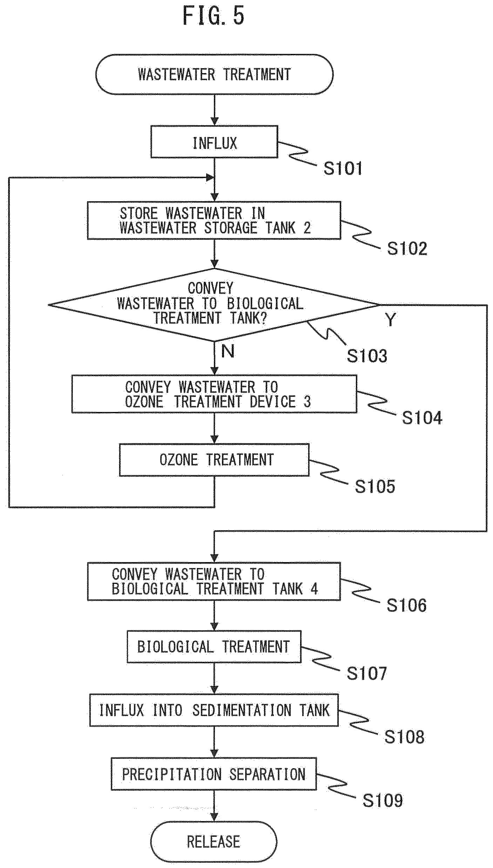

FIG. 5 is a flowchart for explaining one example of wastewater treatment using the wastewater treatment system 1.

At first, wastewater discharged from a wastewater generation source such as a factory or a home flows into the wastewater storage tank 2 (step S101).

Subsequently, wastewater that has flown in is stored in the wastewater storage tank 2 (step S102).

The next is to determine whether or not to convey wastewater stored in the wastewater storage tank 2 to the biological treatment tank 4 (step S103). For example, after the elapse of a given period of time from conveying of wastewater stored in the wastewater storage tank 2 to the ozone treatment device 3, it is judged that wastewater stored in the wastewater storage tank 2 is conveyed to the biological treatment tank 4. When an instrument for measuring the amount of organic matter is provided in the wastewater storage tank 2, and it is judged that the amount of organic matter reaches a level of not more than a given threshold, wastewater stored in the wastewater storage tank 2 may be conveyed to the biological treatment tank 4. In this case, when a judgment on whether or not to convey wastewater stored in the wastewater storage tank 2 to biological treatment tank 4 is made, a controller for controlling the action of the ozone-treated water-conveying pump 21 and the action of the biologically treated water-conveying pump 22 may be provided. Alternatively, an administrator of the wastewater treatment system 1 may make the judgment and control the actions of the pumps.

Subsequently, when it is judged that wastewater stored in the wastewater storage tank 2 is conveyed to the biological treatment tank 4 (step S103-Yes), treatment is proceeded to step S106. In addition, when it is judged that wastewater stored in the wastewater storage tank 2 is not conveyed to the biological treatment tank 4 (step S103-No), wastewater stored in the wastewater storage tank 2 is conveyed to the ozone treatment device 3 (step S104).

Subsequently, the ozone treatment device 3 mixes wastewater conveyed from the wastewater storage tank 2 with ozone gas for ozone treatment (step S105). Subsequently, ozone-treated wastewater is circulated back to the wastewater storage tank 2 so that the treatment procedure goes back to step S102.

Subsequently, wastewater stored in the wastewater storage tank 2 is conveyed to the biological treatment tank 4 (step S106).

Subsequently, the biological treatment tank 4 conducts biological treatment of wastewater conveyed from the wastewater storage tank 2 using activated sludge (step S107).

Subsequently, wastewater stored in the wastewater storage tank 2 flows into the sedimentation tank 5 (step S108).

Subsequently, precipitation separation of wastewater that has flown in from the biological treatment tank 4 takes place in the sedimentation tank 5 such that the wastewater is separated into a sediment and supernatant liquid (step S109). After the elapse of a given period of time after influx of wastewater from the biological treatment tank 4, the supernatant liquid formed as a result of precipitation separation is released as treated wastewater from the sedimentation tank 5 into the sewage treatment plant at an industrial complex or the like, the community plant at a housing complex or the like, the sewage system, rivers or marine waters, and the like. Thus, a series of the steps is completed.

Although the wastewater storage tank 2 and the ozone treatment device 3 are configured to be connected to each other via the overflow pipe 62, the ozone treatment device 3 and the biological treatment tank 4 may be connected to each other via an overflow pipe (not illustrated).

As explained above, the wastewater treatment system 1 in the first embodiment can improve purification effects of biological treatment in the biological treatment tank 4 because the molecular weight of organic matter contained in wastewater is reduced by the ozone treatment device 3 prior to biological treatment of wastewater in the biological treatment tank 4.

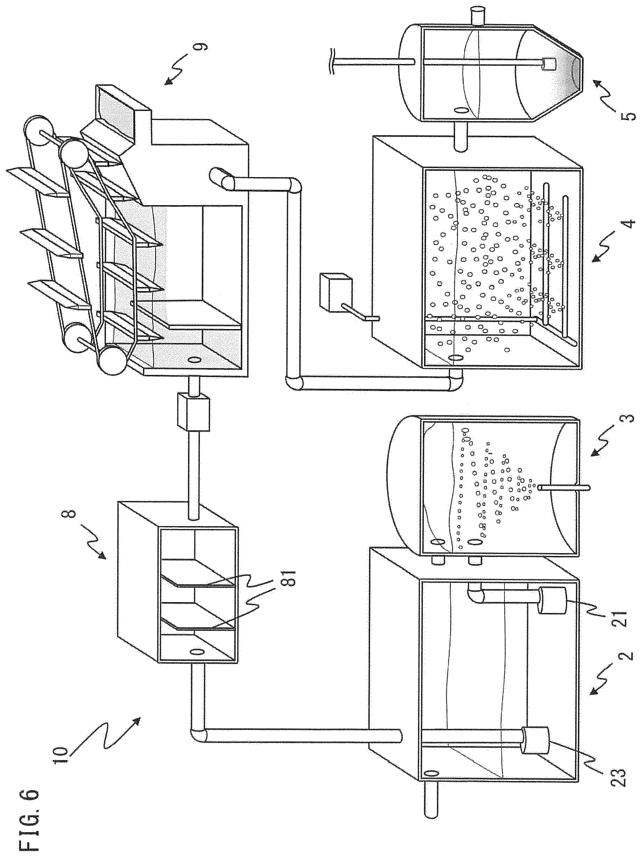

(Second embodiment) FIG. 6 is a schematic diagram for explaining the outline of a wastewater treatment system 10 in the second embodiment. In FIG. 6, components identical to the components of the wastewater treatment system 1 illustrated in FIG. 1 are given the same reference numerals, and the explanation of the components is omitted. A wastewater treatment system 10 in the second embodiment further includes a measurement tank 8 and a separator 9, in addition to the wastewater storage tank 2, the ozone treatment device 3, the biological treatment tank 4, and the sedimentation tank 5 illustrated in FIG. 1.

The wastewater storage tank 2 includes an ozone-treated water-conveying pump 21 and a separator discharging pump 23. The ozone-treated water-conveying pump 21 conveys wastewater stored in the wastewater storage tank 2 to the ozone treatment device 3. The separator discharging pump 23 conveys wastewater stored in the wastewater storage tank 2 to the separator 9 via the measurement tank 8.

The measurement tank 8 has a function to adjust the flow rate of wastewater conveyed from the wastewater storage tank 2. One or more partition boards 81 are installed inside of the measurement tank 8, thereby dividing the inside of the measurement tank 8 into a plurality of chambers. When the wastewater surface reaches a level not less than the height of a partition board 81 in each chamber inside of the measurement tank 8, wastewater is allowed to flow into the next chamber, thereby allowing wastewater to flow into the separator 9 at an adjusted flow rate. An invertor-controlled flow rate adjustment pump may be provided, instead of the measurement tank 8. The flow rate adjustment pump controls the flow rate capacity of the flow rate adjustment pump by controlling the rotational rate of an electric motor of the pump in an inverter-driven system.

The separator 9 is, for example, a pressure floatation device or coagulation sedimentation device and has a function to separate suspended solids such as suspended matter and solid matter contained in wastewater from wastewater. Wastewater, from which suspended solids have been separated by the separator 9, flows in the biological treatment tank 4. As stated above, since the wastewater treatment system 10 includes the separator 9, the separator 9 removes suspended solids from wastewater, which results in the improvement of purification effects of biological treatment of wastewater in the subsequent biological treatment tank 4.

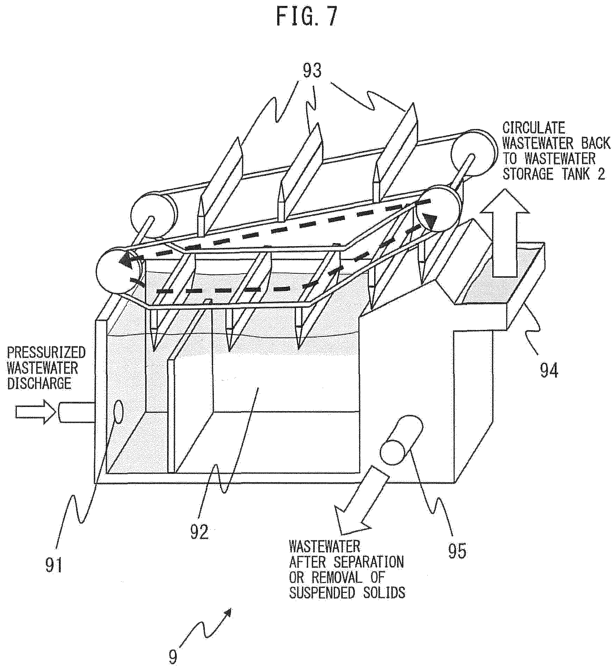

FIG. 7 is a schematic diagram for explaining one example of a wastewater treatment using separator 9.

The separator 9 illustrated in FIG. 7 is one example of a pressure floatation device. Wastewater that has flown in from the measurement tank 8 is partially pressure-fed to a pressure tank (not illustrated) using a pressure pump (not illustrated), thereby generating pressurized wastewater containing dissolved air in the tank. Subsequently, when pressurized wastewater is ejected via a pressurized wastewater ejecting outlet 91 into a floatation tank 92, ultrafine bubbles are generated as a result of ejection of pressurized wastewater.

Subsequently, the generated ultrafine bubbles adhere to an oil content and suspended solids contained in wastewater and then the bubbles go up to the top face of the floatation tank 92. Then, the ultrafine bubbles and the oil content and suspended solids are skimmed by a skimmer 93 and collected by a froth-collecting unit 94. In addition, wastewater, from which the oil content and suspended solids have been separated and removed by the separator 9, flows into the biological treatment tank 4 through a biological treatment tank influx pipe 95. It is also possible to allow the oil content and suspended solids contained in wastewater to float and go up using a pressure floatation tank, thereby separating suspended solids such as suspended matter and solid matter contained in wastewater from wastewater, instead of using the pressure floatation device.

As explained above, since the separator 9 removes the oil content and suspended solids from wastewater, the amount of persistent polymers is reduced.
This results in an increase in the amount of aerobic microorganisms that can adsorb low-molecular-weight polluted substances which can be biologically treated in the biological treatment tank 4 in the subsequent step. Accordingly, polluted substance removal efficiency is improved. In addition, since the molecular weight of organic matter contained in wastewater is reduced by the ozone treatment device 3, suspended solid that floats and goes up in the separator 9 increases, which results in the improvement of suspended solids removal efficiency.

The oil content and suspended solids collected by the froth-collecting unit 94 are circulated back to the wastewater storage tank 2 by a froth-circulating pump (not illustrated) or the like through a froth-circulating pipe (not illustrated) in order to repeat wastewater treatment. This makes it possible to reduce the amount of the oil content and suspended solids, and the like to be discarded, which results in a decrease in the amount of industrial waste to be treated. As a result, the waste disposal cost can be reduced.

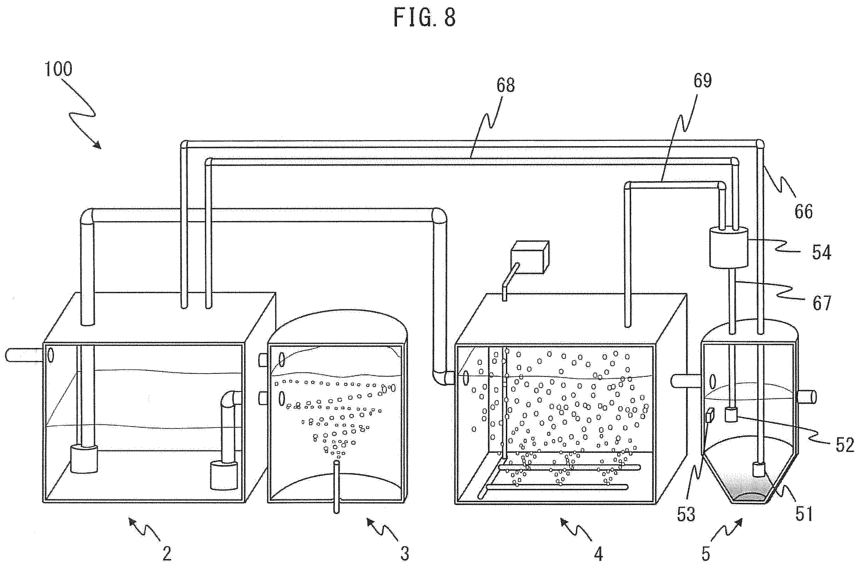

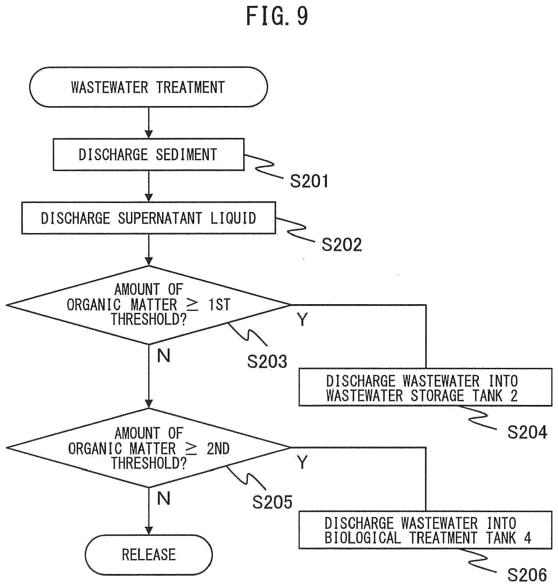

(Third embodiment) FIG. 8 is a schematic diagram for explaining the outline of a wastewater treatment system 100 in the third embodiment. In FIG. 8, components identical to the components of the wastewater treatment system 1 illustrated in FIG. 1 are given the same reference numerals, and the explanation of the components is omitted. FIG. 9 is a flowchart for explaining one example of wastewater treatment using the wastewater treatment system 100.

The sedimentation tank 5 includes a sediment discharging pump 51 and a sediment circulating pipe 66 as well as a supernatant liquid circulating pump 52 and a supernatant liquid discharging pipe 67.

The sediment discharging pump 51 allows a sediment precipitated in the sedimentation tank 5 to be circulated back to the wastewater storage tank 2 through the sediment circulating pipe 66 (S201) in order to repeat wastewater treatment. This makes it possible to reduce the amount of activated sludge, polluted matter, or the like to be discarded, thereby reducing the waste disposal cost.

The supernatant liquid circulating pump 52 discharges supernatant liquid in the sedimentation tank 5 into the wastewater storage tank 2 through a supernatant liquid discharging pipe 67 (S202). The supernatant liquid circulating pump 52 is disposed at a level not less than a given height from the bottom face of the sedimentation tank 5 so as to discharge the supernatant liquid. In addition, an instrument for measuring the amount of organic matter 53 in supernatant liquid is disposed at a level equivalent to the height at which the supernatant liquid circulating pump 52 is disposed. The amount of organic matter is represented by TOC, COD, or the like.

The supernatant liquid discharged by the supernatant liquid circulating pump 52 is stored in a storage unit in the wastewater-bifurcating system 54. Next, a wastewater control unit of the wastewater-bifurcating system 54 determines whether or not the amount of organic matter in supernatant liquid determined by the instrument for measuring the amount of organic matter 53 is not less than the first threshold (step S203). When the amount of organic matter of supernatant liquid is not less than the first threshold (step S203-Yes), the wastewater control unit of the wastewater-bifurcating system 54 discharges supernatant liquid into the wastewater storage tank 2 through a first supernatant liquid circulating pipe 68 (step S204). When the amount of organic matter of supernatant liquid is less than the first threshold (step S203-No), the wastewater control unit of the wastewater-bifurcating system 54 also determines whether or not the amount of organic matter in supernatant liquid is not less than the second threshold (step S205). When the amount of organic matter of supernatant liquid is not less than the second threshold (step S205-Yes), the wastewater control unit of the wastewater-bifurcating system 54 discharges supernatant liquid into the biological treatment tank 4 through a second supernatant liquid circulating pipe 69 (step S206). Note that the second threshold is smaller than the first threshold. When the amount of organic matter in supernatant liquid determined by the instrument for measuring the amount of organic matter 53 is less than the second threshold (step S205-No), the wastewater control unit of the wastewater-bifurcating system 54 terminates discharging by the supernatant liquid circulating pump 52 such that the supernatant liquid is released as treated wastewater from the sedimentation tank 5 into the sewage treatment plant at an industrial complex or the like, the community plant at a housing complex or the like, the sewage system, rivers or marine waters, and the like. Thus, a series of the steps is completed.

Accordingly, control is carried out to circulate the wastewater (supernatant liquid) back to the wastewater storage tank 2 when the amount of organic matter in the supernatant liquid is not less than the first threshold or to circulate the wastewater back to the biological treatment tank 4 when the amount is less than the first threshold. Therefore, efficiency of wastewater treatment is improved.

The supernatant liquid circulating pump 52 may be installed outside of the sedimentation tank 5. Alternatively, it is also possible to form an outlet for discharging supernatant liquid at a level not less than a given height from the bottom face of the sedimentation tank 5 without installing the supernatant liquid circulating pump 52.

It is also possible to install a second instrument for measuring the amount of organic matter 531 (not illustrated), in addition to the instrument for measuring the amount of organic matter 53, on the bottom face of the sedimentation tank 5, and to install a second wastewater-bifurcating system 541 (not illustrated) to the sediment circulating pipe 66. In this case, when the amount of organic matter in the sediment precipitated in the sedimentation tank 5 is not less than the third threshold, a second wastewater control unit of the second wastewater-bifurcating system 541 discharges a sediment into the wastewater storage tank 2 through a first sediment circulating pipe 681 (not illustrated). When the amount of organic matter in the sediment is less than the third threshold, the second wastewater control unit of the second wastewater-bifurcating system 541 also determines whether or not the amount of organic matter in the sediment is not less than the fourth threshold. When the amount of organic matter in the sediment is not less than the fourth threshold, the second wastewater control unit of the second wastewater-bifurcating system 541 discharges the sediment into the biological treatment tank 4 through the second sediment circulating pipe 691 (not illustrated). Note that the fourth threshold is smaller than the third threshold. When the amount of organic matter in the sediment determined by the second instrument for measuring the amount of organic matter 531 is less than the fourth threshold, the second wastewater control unit of the second wastewater-bifurcating system 541 terminates discharging by the sediment discharging pump 51. This makes it possible to reduce the amount of a sediment including sludge substances and the like to be discarded, which results in a decrease in the amount of industrial waste to be treated. As a result, the waste disposal cost can be reduced.

### Examples

Table 1 lists the results of measuring BOD (mg/L) and the normal hexane extract content (mg/L) before and after ozone treatment for wastewater that flew into the ozone treatment device 3 of the wastewater treatment system 1.

**[Table 1]**

| | Before ozone treatment | After ozone treatment |
|---|---|---|
| BOD (mg/L) | 690 | 470 |
| Normal hexane extract content (mg/L) | 140 | 50 |

BOD of wastewater before ozone treatment was 690 mg/L while BOL of ozone-treated wastewater decreased to as low as 470 mg/L. In addition, the normal hexane extract content of wastewater before ozone treatment was 140 mg/L while the normal hexane extract content of ozone-treated wastewater decreased to as low as 50 mg/L.

As explained above, since the wastewater treatment systems 1, 10, 100 can reduce the molecular weight of organic matter in wastewater using the ozone treatment device before the influx of wastewater into the biological treatment tank, thereby making it possible to improve purification effects of biological treatment. Therefore, the wastewater treatment systems 1, 10, 100 can sufficiently remove a substance that is a cause of sludge from wastewater.

Note that the present invention is not limited to the first to third embodiments. For example, the wastewater treatment systems 1, 10, 100 may not include the sedimentation tank 5 and may release wastewater purified by the biological treatment tank 4 as treated wastewater into the sewage treatment plant at an industrial complex or the like, the community plant at a housing complex or the like, the sewage system, rivers or marine waters, and the like.

In addition, the wastewater treatment systems 1, 10, 100 may not include the sedimentation tank 5 and may conduct solid-liquid separation of wastewater in the biological treatment tank 4 by the membrane bioreactor (MBR) method. According to the membrane bioreactor method, an immersion-type membrane separation module is installed in the biological treatment tank 4 such that treated water in the membrane separation module is discharged outside of the membrane separation module by an aspiration pump. The membrane separation module includes a membrane element for solid-liquid separation for separating wastewater into treated water and activated sludge in the biological treatment tank 4. The membrane element includes, for example, a hollow fiber membrane, a flat membrane, a monolith membrane, or the like. As a result, the facility scale of the wastewater treatment systems 1, 10, 100 is down-sized, thereby making it possible to reduce the cost of installation of the wastewater treatment systems 1, 10, 100.

In addition, when the amount of activated sludge (mixed liquor suspended solid, MLSS) in wastewater in the biological treatment tank 4 is measured and MLSS is not less than a given threshold, the wastewater may be circulated back to the wastewater storage tank 2. In this case, the biological treatment tank 4 includes a returning pump for conveying wastewater in the biological treatment tank 4 to the wastewater storage tank 2, in addition to an aspiration pump for discharging treated water in the membrane separation module outside of the wastewater treatment systems 1, 10, 100 (the sewage treatment plant at an industrial complex or the like, the community plant at a housing complex or the like, the sewage system, rivers or marine waters, and the like.). An MLSS measuring instrument is installed in the biological treatment tank 4, and the wastewater treatment systems 1, 10, 100 are each equipped with a controller (not illustrated) for monitoring MLSS measured by the MLSS measuring instrument over time. When the measured MLSS is not less than a given threshold, the controller controls the returning pump such that wastewater is conveyed to the wastewater storage tank 2, and when the measured MLSS is less than a given threshold, the aspiration pump is controlled such that wastewater is discharged outside of the wastewater treatment systems 1, 10, 100 (the sewage treatment plant at an industrial complex or the like, the community plant at a housing complex or the like, the sewage system, rivers or marine waters, and the like.). Accordingly, when there is excess sludge in wastewater in the biological treatment tank 4, it is possible to prevent generation of waste such as excess sludge by circulating wastewater back to the wastewater storage tank 2 and repeating wastewater treatment, thereby reducing the waste disposal cost. In addition, an administrator of the wastewater treatment systems 1, 10, 100 may monitor MLSS calculated using the MLSS measuring instrument and control the aspiration pump and the returning pump. Further, even when biological treatment other than the membrane bioreactor method is employed, as long as MLSS of wastewater in the biological treatment tank 4 is not less than a given threshold, wastewater in the biological treatment tank 4 may be circulated back to the wastewater storage tank 2.

In addition, the wastewater treatment systems 1, 10, 100 may be equipped with two tanks, which are biological treatment tanks 400, 410. That the biological treatment tanks 400, 410 have the function equivalent to that of the biological treatment tank 4 described above. In this case, the wastewater storage tank 2 conveys wastewater to one of the ozone treatment device 3 and the first biological treatment tank 400. In addition, the first biological treatment tank 400 conveys wastewater to the ozone treatment device 3, and the ozone treatment device 3 circulates wastewater back to one of the wastewater storage tank 2 and the first biological treatment tank 400. Further, the first biological treatment tank 400 conveys wastewater to the second biological treatment tank 410, and the second biological treatment tank 410 conveys wastewater to the sedimentation tank 5. When an instrument for measuring the amount of organic matter and an inter-biological-treatment-tank pump for conveying wastewater in the first biological treatment tank 400 to the second biological treatment tank 410 are installed in the first biological treatment tank 400, and it is determined that the amount of organic matter is not more than a given threshold, wastewater stored in the first biological treatment tank 400 may be conveyed to the second biological treatment tank 410. In this case, it is possible to determine whether or not wastewater stored in the first biological treatment tank 400 is conveyed to the second biological treatment tank 410, and to install a controller for controlling the action of the inter-biological-treatment-tank pump. It is also possible to allow an administrator of the wastewater treatment systems 1, 10, 100 to determine and control the action of the inter-biological-treatment-tank pump. Further, it is possible to further provide two or more second biological treatment tanks 410 arranged in series. For example, when two second biological treatment tanks 410 are provided, wastewater stored in the first biological treatment tank 400 is conveyed to the first tank of the second biological treatment tank 410, wastewater stored in the first tank of the second biological treatment tank 410 is conveyed to the second tank of the second biological treatment tank 410, and wastewater stored in the second tank of the second biological treatment tank 410 is conveyed to the sedimentation tank 5.

Persons skilled in the art could understand that various alterations, substitutions, and modifications may be added without departing from the spirit and scope of the present invention.

### Reference Signs List

1, 10, 100 wastewater treatment system
2 wastewater storage tank
21 ozone-treated water-conveying pump
22 biologically treated water-conveying pump
23 separator discharging pump
3 ozone treatment device
31 cylindrical container
32 ozone jetting nozzle
33 ozone jetting port
4 biological treatment tank
41 blower
42 air piping
43 air jetting port
5 sedimentation tank
51 sediment discharging pump
52 supernatant liquid circulating pump
53 instrument for measuring the amount of organic matter
54 wastewater-bifurcating system
60 storage tank influx pipe
61 ozone-treated water-conveying pipe
62 overflow pipe
63 storage tank outflux pipe
64 sedimentation tank influx pipe
65 treated wastewater discharging pipe
66 sediment circulating pipe
67 supernatant liquid discharging pipe
68 first supernatant liquid circulating pipe
69 second supernatant liquid circulating pipe
7 wastewater circulating structure
8 measurement tank
81 partition board
9 separator
91 pressurized wastewater ejecting outlet
92 floatation tank
93 skimmer
94 froth-collecting unit
95 biological treatment tank influx pipe

## Claims

1. A wastewater treatment system comprising:
a wastewater storage tank for storing wastewater containing organic matter;
an ozone treatment device for treating wastewater with ozone, thereby reducing the molecular weight of organic matter contained in wastewater;
a wastewater circulating structure for conveying wastewater stored in the wastewater storage tank to the ozone treatment device and circulating the ozone-treated wastewater back into the wastewater storage tank; and
a biological treatment tank for bringing aerobic microorganisms into contact with wastewater, conveyed from the wastewater storage tank, which contains the ozone-treated wastewater, thereby reducing organic matter contained in wastewater.

2. The wastewater treatment system according to claim 1, wherein the wastewater circulating structure comprises:
an ozone-treated water-conveying pipe, for conveying wastewater stored in the wastewater storage tank to the ozone treatment device, which is disposed between the wastewater storage tank and the ozone treatment device;
an ozone-treated wastewater circulating pipe, for circulating the ozone-treated wastewater back into the wastewater storage tank, which is disposed between the wastewater storage tank and the ozone treatment device; and
an ozone-treated water-conveying pump for conveying wastewater stored in the wastewater storage tank to the ozone treatment device.

3. The wastewater treatment system according to claim 1 or 2, further comprises a separator for separating suspended matter or solid matter contained in wastewater and conveying wastewater that does not contain the separated suspended matter or solid matter from the wastewater storage tank to the biological treatment tank, the separator is disposed between the wastewater storage tank and the biological treatment tank.

4. The wastewater treatment system according to claim 3, further comprises a froth-circulating pipe for circulating suspended solids separated in the separator back into the wastewater storage tank.

5. The wastewater treatment system according to claim 3 or 4, wherein the separator is a pressure floatation device or coagulation sedimentation device.

6. The wastewater treatment system according to any one of claims 1 to 5, wherein the ozone treatment device is a swirl jet-type ozone treatment device, equipped with a nozzle for jetting ozone gas, which generates a swirl jet flow phenomenon induced by the ozone gas jetted by the nozzle, thereby stirring wastewater with the ozone gas.

7. The wastewater treatment system according to any one of claims 1 to 5, wherein the ozone treatment device is an ejector-type ozone mixing device or ozone diffuser.

8. The wastewater treatment system according to any one of claims 1 to 7, wherein the wastewater storage tank includes:
a measuring instrument for measuring the amount of organic matter in wastewater stored in the wastewater storage tank; and
a controller for
conveying wastewater stored in the wastewater storage tank to the ozone treatment device when the amount of organic matter in wastewater stored in the wastewater storage tank is not less than a given threshold and
conveying wastewater stored in the wastewater storage tank to the biological treatment tank when the amount of organic matter in wastewater is less than a given threshold.

9. The wastewater treatment system according to any one of claims 1 to 8, further comprises a sedimentation tank for separating wastewater into a sediment and supernatant liquid, wherein the sedimentation tank comprises a sediment discharging pump for circulating a sediment precipitated in the sedimentation tank back into the wastewater storage tank.

10. A wastewater treatment method comprising the steps of:
storing wastewater containing organic matter in a wastewater storage tank;
conveying wastewater stored in the wastewater storage tank to an ozone treatment device, using a wastewater circulating structure;
treating the conveyed wastewater with ozone, thereby reducing the molecular weight of organic matter contained in wastewater, using the ozone treatment device;
circulating the ozone-treated wastewater back to the wastewater storage tank, using the wastewater circulating structure; and
bringing aerobic microorganisms into contact with wastewater which contains the ozone-treated wastewater and is conveyed from the wastewater storage tank, thereby reducing organic matter contained in wastewater, using a biological treatment tank.
